# EUROPÄISCHE PATENTSCHRIFT

(11) **EP 1 885 770 B1**
(45) Veröffentlichungstag und Bekanntmachung des Hinweises auf die Patenterteilung: **08.10.2008**
(21) Anmeldenummer: 06743051.2
(22) Anmeldetag: 24.05.2006
(51) Int. Cl.: C08G 77/458, C08G 18/61, B01D 19/04

(54) **ENTSCHÄUMERFORMULIERUNGEN**
DEFOAMER FORMULATIONS
FORMULATIONS ANTIMOUSSE

(30) Priorität: 02.06.2005 DE 102005025450
(43) Veröffentlichungstag der Anmeldung: 13.02.2008
(73) Patentinhaber: Wacker Chemie AG, 81737 München (DE)
(72) Erfinder: BURGER, Willibald, 84489 Burghausen (DE); HERZIG, Christian, 83329 Waging (DE); WIMMER, Josef, 84489 Burghausen (DE)
(74) Vertreter: Deffner-Lehner, Maria
(86) Internationale Anmeldenummer: PCT/EP2006/004948
(87) Internationale Veröffentlichungsnummer: WO 2006/128624

(56) Entgegenhaltungen:
- EP-A- 1 076 073
- US-A- 3 246 048
- US-A- 5 625 024

## Beschreibung

Die Erfindung betrifft Entschäumerformulierungen, enthaltend (A) Antischaummittel auf Basis von Siloxanen und (B) Polysiloxancopolymere, sowie deren Anwendung zum Entschäumen von, insbesondere den bei der Zellstoffherstellung anfallenden, wässrigen Medien.

In vielen flüssigen, insbesondere wässrigen Systemen, die als erwünschte oder auch unerwünschte Bestandteile oberflächenaktive Verbindungen enthalten, können durch Schaumbildung Probleme auftreten, wenn diese Systeme in mehr oder weniger intensivem Kontakt mit gasförmigen Stoffen gebracht werden, beispielsweise beim Begasen von Abwässern, beim intensiven Rühren von Flüssigkeiten, bei Destillations-, Wasch- oder Färbeprozessen oder bei Abfüllvorgängen.

Die Bekämpfung dieses Schaumes kann auf mechanischem Wege oder durch den Zusatz von Entschäumern erfolgen. Dabei haben sich Entschäumer auf Siloxanbasis besonders bewährt.

Entschäumer auf Basis von Siloxanen werden beispielsweise nach DD-A 056 762 durch Erhitzen von hydrophiler Kieselsäure in Polydimethylsiloxanen hergestellt. Dieses Verfahren ist recht aufwendig, trotzdem ist die Wirksamkeit der so hergestellten Entschäumer nicht zufriedenstellend. Die Verteilung von hydrophobierter Kieselsäure in einem Polydimethylsiloxan, z. B. entsprechend DE-A 29 25 722, ist ein rationelleres Verfahren, die Wirksamkeit der erhaltenen Entschäumer aber ebenfalls verbesserungswürdig.

Bekannt ist ebenfalls die Verwendung von modifizierten Polyorganosiloxanen in Entschäumerzubereitungen. So wird z. B. die Verwendung von verzweigten Siloxanentschäumern in Kombination mit Polyether-Polysiloxan-Copolymeren als Entschäumer z.B. für die Zellstoffherstellung empfohlen (EP-A 341 952). Auch in Kombination mit Mineralölen als Trägeröl sollen Polyether-Polysiloxan-Copolymere einen positiven Effekt haben (US 5,523,019). Gemäß WO 98/000216 sollen als Tenside in Entschäumerformulierungen Siloxane mit Dimethyl-3-hydroxypropylpolyoxyethylenpolyoxypropylengruppen besonders geeignet sein.

In EP-A 663 225 und EP-A 1076073 werden vernetzte bzw. verzweigte Polyorganosiloxane, welche mindestens eine Polyethergruppierung tragen, als eine der beiden Komponenten einer Entschäumerformulierung beansprucht. Die Vernetzung erfolgt dabei über Alkylengruppen, über Polydimethylsiloxane oder über Polyethergruppen. Durch die Verknüpfung über Si-C Bindungen sind die Produkte hydrolysestabil.
Im Gegensatz dazu führt das in US-A 5,625,024 vorgeschlagene Verfahren auch zu Verknüpfungen über Si-O-C-Gruppen, die insbesondere in sauren oder basischen Medien nicht hydrolysestabil sind und somit im schäumenden wässrigen Medium ihre Wirksamkeit verlieren.

In DE 102 55 649 A werden Entschäumerformulierungen beschrieben, in denen zu bekannten Antischaummitteln speziell verzweigte Polyether-Polysiloxan-Copolymere zugesetzt werden. Derartige Entschäumerformulierungen lassen jedoch in Gegenwart von Wasser in ihrer Wirkung nach.

Die nach dem Stand der Technik hergestellten Entschäumerformulierungen weisen entweder nicht immer eine ausreichende Wirksamkeit auf oder sind nicht hydrolysestabil.

Die Aufgabe der Erfindung bestand deshalb darin, die oben genannten Nachteile zu vermeiden und Entschäumerformulierungen auf der Basis von Siloxanen bereitzustellen, welche insbesondere in stark schäumenden, heißen, alkalischen Medien, welche beispielsweise bei der Zellstoffherstellung anfallen, eine verbesserte Wirksamkeit aufweisen.

Gegenstand der Erfindung sind Entschäumerformulierungen enthaltend
(A) Antischaummittel auf der Basis von Siloxanen und
(B) Polysiloxancopolymere herstellbar indem
   in einem ersten Schritt
   Organopolysiloxane (1), die pro Molekül mindestens ein Si-gebundenes Wasserstoffatom, vorzugsweise mindestens zwei Si-gebundene Wasserstoffatome, aufweisen, mit
   weitgehend linearen oligomeren oder polymeren Verbindungen (2) der allgemeinen Formel

   R¹-(A-CₙH₂ₙ)ₘ-A¹-H (I),

   wobei R¹ einen einwertigen gegebenenfalls substituierten Kohlenwasserstoffrest bedeutet, an den Si-H-Gruppen in einer Hydrosilylierungsreaktion angelagert werden können, vorzugsweise einen aliphatische C-C-Mehrfachbindung aufweisenden Kohlenwasserstoffrest bedeutet,
   A einen zweiwertigen, polaren organischen Rest ausgewählt aus der Gruppe von -O- , -C(O)-O- , -O-C(O)- , -O-C(O)-O- , -C(O)-NH- , -NH-C(O)- , Urethanrest und Harnstoffrest, vorzugsweise ein Sauerstoffatom -O-, bedeutet,
   A¹ einen zweiwertigen, polaren organischen Rest ausgewählt aus der Gruppe von -O- , -NH- und -NR^{'}- (wobei R^{'} einen einwertigen Kohlenwasserstoffrest mit 1 bis 18 Kohlenstoffatomen bedeutet), vorzugsweise ein Sauerstoffatom -O-, bedeutet,
   n eine ganze Zahl von 1 bis 20, vorzugsweise 1 bis 4, bevorzugt 2 oder 3, ist und
   m eine ganze positive Zahl, vorzugsweise 5 bis 50, ist, umgesetzt werden,
   und in einem zweiten Schritt
   die so erhaltenen H-A¹-Gruppen aufweisenden Zwischenprodukte (4) mit organischen Verbindungen (5), die pro Molekül mindestens zwei Isocyanatgruppen aufweisen, umgesetzt werden,
   mit der Maßgabe, dass der Wassergehalt der zur Herstellung der Polysiloxancopolymere eingesetzten Verbindungen (1) und (2) niedriger ist als 2000 Gew.-ppm, vorzugsweise niedriger ist als 1500 Gew.-ppm, bevorzugt niedriger ist als 1000 Gew.-ppm, jeweils bezogen auf das Gesamtgewicht von Verbindungen (1) und (2).

Der Wassergehalt bezieht sich auf Raumtemperatur (20°C) und dem Druck der umgebenden Atmosphäre (1020 hPa).

Die erfindungsgemäßen Polysiloxancopolymere besitzen eine Viskosität von vorzugsweise 1 000 bis 100 000 000 mPa·s bei 25°C, bevorzugt 1 000 bis 10 000 000 mPa·s bei 25°C.

Für die Wirksamkeit der erfindungsgemäßen Entschäumerformulierung ist das verwendete erfindungsgemäße Polysiloxancopolymer (B) von ausschlaggebender Bedeutung.

Die Entschäumerformulierungen enthalten vorzugsweise 0,1 bis 75 Gew.-% , bevorzugt 0,1 bis 50 Gew.-%, besonders bevorzugt 1,5 bis 50 Gew.-%, der erfindungsgemäßen Polysiloxancopolymere (B).

Die erfindungsgemäßen Polysiloxancopolymere (B) werden wie folgt erhalten:

Im ersten Verfahrensschritt werden als Organopolysiloxane (1) vorzugsweise lineare, cyclische oder verzweigte Organopolysiloxane aus Einheiten der allgemeinen Formel 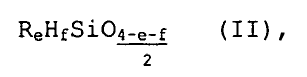 wobei
R gleich oder verschieden sein kann und einen einwertigen, gegebenenfalls substituierten Kohlenwasserstoffrest mit 1 bis 18 Kohlenstoffatom(en) je Rest bedeutet,
e 0, 1, 2 oder 3,
f 0, 1 oder 2
und die Summe von e+f 0, 1, 2 oder 3 ist,
mit der Maßgabe, dass pro Molekül mindestens ein Si-gebundenes Wasserstoffatom, bevorzugt mindestens 2 Si-gebundene Wasserstoffatome vorliegen, verwendet.

Bevorzugt werden als Organopolysiloxane (1) solche der allgemeinen Formel

H_{g}R_{3-g}SiO (SiR₂O)ₒ(SiRHO)ₚSiR₃-_{g}H_{g} (III)

wobei R die oben dafür angegebene Bedeutung hat,
g 0, 1 oder 2,
o 0 oder eine ganze Zahl von 1 bis 1500 und
p 0 oder eine ganze Zahl von 1 bis 200 ist,
mit der Maßgabe, dass pro Molekül mindestens ein Si-gebundenes Wasserstoffatom, bevorzugt mindestens zwei Si-gebundene Wasserstoffatome, vorliegen, verwendet.

Im Rahmen dieser Erfindung soll Formel (III) so verstanden werden, dass o Einheiten -(SiR₂O)- und p Einheiten -(SiRHO)- in beliebiger Weise im Organopolysiloxanmolekül verteilt sein können.

Besonders bevorzugt ist g in Formel (III) 0 und p in Formel (III) 3 bis 10 und es werden als Organopolysiloxane (1) Copolymerisate aus Hydrogenalkylsiloxy- und Dialkylsiloxyeinheiten, insbesondere Copolymerisate aus Hydrogenmethylsiloxy- und Dimethylsiloxyeinheiten eingesetzt.

Die Organopolysiloxane (1) besitzen vorzugsweise eine durchschnittliche Viskosität von 10 bis 1 000 mPa.s bei 25°C, bevorzugt 50 bis 1000 mPa.s bei 25°C und besonders bevorzugt 60 bis 600 mPa.s bei 25°C.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest.

Bevorzugt handelt es sich bei dem Rest R um einen einwertigen Kohlenwasserstoffrest mit 1 bis 6 Kohlenstoffatomen, wobei der Methylrest besonders bevorzugt ist.

Beispiele für Reste R gelten im vollen Umfang für Reste R'.

R¹ bedeutet vorzugsweise einen einwertigen, Kohlenwasserstoffrest mit aliphatischer C-C-Mehrfachbindung.

Beispiele für Reste R¹ sind Alkenylreste, wie der Vinyl-, 5-Hexenyl-, Cyclohexenyl-, 1-Propenyl-, Allyl∼, 3-Butenyl- und 4-Pentenylrest, und Alkinylreste, wie der Ethinyl-, Propargyl- und 1-Propinylrest.

Bevorzugt handelt es sich bei dem Rest R¹ um einen Alkenylreste, insbesondere ω-Alkenylrest, wobei der Allylrest besonders bevorzugt ist.

Bevorzugt als oligomere oder polymere Verbindungen (2) sind Polyether der allgemeinen Formel

H₂C=CH-R²- (OCₙH₂ₙ)ₘ-OH (IV),

wobei R² ein zweiwertiger Kohlenwasserstoffrest mit 1 bis 10 Kohlenstoffatomen, bevorzugt ein Rest der Formel -CH₂- , -CH(CH₃)- oder -C(CH₃)₂- ist und
n und m die oben dafür angegebene Bedeutung haben.

Bevorzugte Beispiele für Polyether (2) sind solche der allgemeinen Formel

H₂C=CH-R²-(OCH₂CH₂)ₐ[OCH₂CH(CH₃)]_{b}-OH (IV'),

wobei R² die oben dafür angegebene Bedeutung hat und
a und b 0 oder eine ganze Zahl von 1 bis 200 ist, vorzugsweise 5 bis 50 ist.

Weitere Beispiele für oligomere oder polymere Verbindungen (2) sind ungesättigte Polyester, wie H₂C=CH-R²-[O(O)CCₙH₂ₙ]ₘ-OH, ungesättigte Polycarbonate, wie H₂C=CH-R²-[OC(O)OCₙH₂ₙ]ₘ-OH und ungesättigte Polyamide, wie H₂C=CH-R²-[NHC(O)CₙH₂ₙ]ₘ-NH₂,
wobei R², n und m die oben dafür angegebene Bedeutung haben.

Die Verbindungen (2) werden im ersten Verfahrensschritt vorzugsweise in Mengen von 1,0 bis 4,0, bevorzugt 1,3 bis 2,5 Mol Rest R¹, der vorzugsweise ein Rest mit aliphatischer C-C-Mehrfachbindung ist, bevorzugt ein ω-Alkenylrest ist, je Grammatom Si-gebundenem Wasserstoff im Organopolysiloxan (1) eingesetzt.

Im ersten Verfahrensschritt werden vorzugsweise die Anlagerung von Si-gebundenem Wasserstoff an aliphatische Mehrfachbindung fördernde Katalysatoren (3) eingesetzt. Als Katalysatoren (3) können auch bei dem erfindungsgemäßen Verfahren die gleichen Katalysatoren eingesetzt werden, die auch bisher zur Förderung der Anlagerung von Si-gebundenem Wasserstoff an aliphatische Mehrfachbindung eingesetzt werden konnten. Bei den Katalysatoren handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. PtCl₄, H₂PtCl₆*6H₂O, Na₂PtCl₄*4H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungs-produkten aus H₂PtCl₆*6H₂O und Cyclohexanon, Platin-Vinyl-siloxankomplexe, wie Platin-1,3-Divinyl-1,1,3,3-tetramethyl-disiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-di-chlorid, Cyclooctadien-Platindichlorid, Norbornadien-Platindichlorid, Gamma-picolin-Platindichlorid, Cyclopentadien-Platindichlorid, sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin oder Ammonium-Platinkomplexe.

Der Katalysator (3) wird im ersten Verfahrensschritt vorzugsweise in Mengen von 1 bis 50 Gew.-ppm (Gewichtsteilen je Million Gewichtsteilen), bevorzugt in Mengen von 2 bis 20 Gew.-ppm, jeweils berechnet als elementares Platin und bezogen auf das Gesamtgewicht der Organopolysiloxane (1) und Verbindungen (2) eingesetzt.

Der erste Verfahrensschritt wird vorzugsweise beim Druck der umgebenden Atmosphäre, also etwa bei 1020 hPa (abs.), durchgeführt, es kann aber auch bei höheren oder niedrigeren Drücken durchgeführt werden. Ferner wird der erste Verfahrensschritt vorzugsweise bei einer Temperatur von 60°C bis 140°C, bevorzugt 80°C bis 120°C, durchgeführt.

Im zweiten Verfahrensschritt werden als organische Verbindungen (5), die pro Molekül mindestens zwei Isocyanatgruppen aufweisen, bevorzugt solche der allgemeinen Formel

O=C=N-R³-N=C=O (V),

wobei R³ einen zweiwertigen Kohlenwasserstoffrest mit 4 bis 40 Kohlenstoffatomen je Rest bedeutet, eingesetzt.

Beispiele für organische Verbindungen (5) sind Hexamethylen-1,6-diisocyanat, Isophorondiisocyanat, Tolylen-2,4-diisocyanat, Tolylen-2,6-diisocyanat, Phenylen-1,3-diisocyanat, 4,4'-Methylen-bis(cyclohexylisocyanat), 4,4'-Methylen-bis(phenylisocyanat) und Dimethylphenyldiisocyanat.

Organische Verbindungen (5) werden im zweiten Verfahrensschritt vorzugsweise in Mengen von 0,1 bis 0,9 Mol, bevorzugt 0,2 bis 0,7 Mol, Isocyanatgruppe je Mol H-A¹-Gruppe im Zwischenprodukt (4) eingesetzt.

Für die Umsetzung im zweiten Schritt des erfindungsgemäßen Verfahrens werden vorzugsweise Kondensationskatalysatoren (6), wie Di-n-butylzinndilaurat, Zinn-II-octoat, Dibutylzinndiacetat, Kaliumoctoat oder tert. Amine, wie Dimethylcyclohexylamin, Dimethylaminopropyldipropanolamin, Pentamethyldipropylentriamin, N-Methylimidazol oder N-Ethylmorpholin, eingesetzt.

Ein bevorzugtes Polysiloxancopolymer wird erhalten, indem im ersten Verfahrensschritt ein methylterminiertes hydrogenfunktionelles Polysiloxan (1), das seitenständig Si-gebundene Wasserstoffatome aufweist, mit einem Überschuss an Polyether (2) der Formel (IV) umgesetzt wird und im zweiten Verfahrensschritt das Zwischenprodukt (4), ein Siliconpolyether mit Kammstruktur, mit einem Diisocyanat (5) der Formel (V) umgesetzt wird, wobei Urethan-Gruppen in das Polysiloxancopolymer eingeführt werden. Auch freier Polyether aus dem 1. Schritt wird dabei durch Urethanbildung gebunden.

Die Urethangruppen in den erfindungsgemäßen hydrophilen Polysiloxancopolymeren können als Donoren und Akzeptoren bei der Ausbildung von Wasserstoffbrücken wirken.

Im zweiten Schritt des erfindungsgemäßen Verfahrens können zusätzlich zu den organischen Verbindungen (5) noch weitere Verbindungen (7), die gegenüber Isocyanatgruppen reaktiv sind, eingesetzt werden. Beispiele für weitere Verbindungen (7) sind solche ausgewählt aus der Gruppe der Formeln

R⁴-(A-CₙH₂ₙ)ₘ-A¹-H (VII),

HO-R⁵-NR⁴-R⁵-OH (VIII),

HO-R⁵-NR⁴₂ (IX),

HO-R⁶(NR⁴₂)₂ (X),

HO-R⁷(NR⁴₂)₃ (XI),

(HO)₂R⁶-NR⁴₂ (XII)

HNR⁴₂ (XIII)

wobei R⁴ ein Wasserstoffatom oder einen Rest R, der gegebenenfalls ein oder mehrere Stickstoffatom enthalten kann, bedeutet,
R⁵ einen zweiwertigen Kohlenwasserstoffrest mit 1 bis 10 Kohlenstoffatomen je Rest bedeutet,
R⁶ einen dreiwertigen organischen Rest mit 1 bis 100 Kohlenstoffatomen je Rest, vorzugsweise einen dreiwertigen Kohlenwasserstoffrest mit 1 bis 100 Kohlenstoffatomen, der ein oder mehrere Sauerstoffatome enthält,
R⁷ einen vierwertigen organischen Rest mit 1 bis 100 Kohlenstoffatomen je Rest, vorzugsweise einen vierwertigen Kohlenwasserstoffrest mit 1 bis 100 Kohlenstoffatomen, der ein oder mehrere Sauerstoffatome enthält, und
A¹, n und m die oben dafür angegebene Bedeutung haben.

Beispiele für Verbindungen der Formel (VII) sind Methylpolyethylenoxid, Butylpolyethylenoxid, Methylpolyethylenoxid/polypropylenoxid und Methylpolypropylenoxid.

Beispiele für Verbindungen der Formel (VIII) sind N-Methyldiethanolamin, N-Methyldipropanolamin, Dimethylaminopropyldipropanolamin, N-Dodecyldiethanolamin und N-Stearyldipropanolamin.

Beispiele für Verbindungen der Formel (IX) sind N,N-Dimethylethanolamin, N,N-Diethylpropanolamin, N,N-Dimethylaminopropyl-methylethanolamin und Dimethyl-2-(2-aminoethoxy)ethanol.

Beispiele für Verbindungen der Formel (X) sind 1,5-Bis(dimethylamino)-pentan-3-ol, 1,5-Bis(methylamino)-pentan-3-ol, 1,7-Bis(dimethylamino)-heptan-4-ol und N,N-Bis-(3-dimethylaminopropyl)-N-isopropanolamin

Beispiele für Verbindungen der Formel (XI) sind 2,4,6-Tris(dimethylaminomethyl)-phenol, 1,1,1-Tris(dimethylaminomethyl)-methanol und 2,4,6- Tris(dimethylaminomethyl)-cyclohexanol.

Beispiele für Verbindungen der Formel (XII) sind N,N-Bis(dimethylaminopropyl)-3-aminopropan-1,2-diol, N,N-Bis(dimethylaminopropyl)-2-aminopropan-1,3-diol, N,N-Bis(3-dimethylaminopropyl)-carbaminosäuremonoglycerid.

Beispiele für Verbindungen der Formel (XIII) sind Dibutylamin, Octylamin, Benzylamin, 3-(Cyclohexylamino)-propylamin, 2-(Diethylamino)-ethylamin, Dipropylentriamin, Isophorondiamin, Dimethylaminopropylmethylamin, Aminopropylmorpholin, N,N-Bis(dimethylaminopropyl)amin, Dimethylaminopropylamin.

Verbindungen der Formel (VIII) bis (XIII) bieten die Möglichkeit in dem Polysiloxancopolymer protonierbaren Stickstoff einzubauen.

Verbindungen der Formel (VII) werden im zweiten Verfahrensschritt in Mengen von vorzugsweise 0 bis 2 Mol, bevorzugt 0 bis 1 Mol, H-A¹-Gruppe je Mol H-A¹-Gruppe in Verbindung (2) eingesetzt.

Verbindungen der Formel (VIII) werden im zweiten Verfahrensschritt in Mengen von vorzugsweise 0 bis 2 Mol, bevorzugt 0 bis 1 Mol, HO-Gruppe je Mol H-A¹-Gruppe in Verbindung (2) eingesetzt.

Verbindungen der Formel (IX) werden im zweiten Verfahrensschritt in Mengen von vorzugsweise 0 bis 2 Mol, bevorzugt 0 bis 1 Mol, HO-Gruppe je Mol H-A¹-Gruppe in Verbindung (2) eingesetzt.

Verbindungen der Formel (X) werden im zweiten Verfahrensschritt in Mengen von vorzugsweise 0 bis 2 Mol, bevorzugt 0 bis 1 Mol, HO-Gruppe je Mol H-A¹-Gruppe in Verbindung (2) eingesetzt.

Verbindungen der Formel (XI) werden im zweiten Verfahrensschritt in Mengen von vorzugsweise 0 bis 2 Mol, bevorzugt 0 bis 1 Mol, HO-Gruppe je Mol H-A¹-Gruppe in Verbindung (2) eingesetzt.

Verbindungen der Formel (XII) werden im zweiten Verfahrensschritt in Mengen von vorzugsweise 0 bis 2 Mol, bevorzugt 0 bis 1 Mol, HO-Gruppe je Mol H-A¹-Gruppe in Verbindung (2) eingesetzt.

Verbindungen der Formel (XIII) werden im zweiten Verfahrensschritt in Mengen von vorzugsweise 0 bis 2 Mol, bevorzugt 0 bis 1 Mol, HN-Gruppe je Mol H-A¹-Gruppe in Verbindung (2) eingesetzt.

Auch bei der Verwendung von Verbindungen (7) wird Polyisocyanat (5) vorzugsweise im Unterschuss eingesetzt, um ein sicheres Abreagieren der gesundheitsgefährdenden Isocyanatgruppen zu gewährleisten. Organische Verbindungen (5) werden daher im zweiten Verfahrensschritt vorzugsweise in Mengen von 0,1 bis 0,9 Mol, bevorzugt 0,2 bis 0,7 Mol, Isocyanatgruppe je Mol der Summe mit Isocyanatgruppen reagierender Funktionen aus der Summe von Zwischenprodukt (4) und Verbindungen (7) eingesetzt.

Der zweite Verfahrensschritt wird vorzugsweise beim Druck der umgebenden Atmosphäre, also etwa bei 1020 hPa (abs.), durchgeführt, es kann aber auch bei höheren oder niedrigeren Drücken durchgeführt werden. Ferner wird der zweite Verfahrensschritt vorzugsweise bei einer Temperatur von 40°C bis 160°C, bevorzugt 80°C bis 140°C, durchgeführt.

Zur Erniedrigung der teilweise sehr hohen Produktviskositäten können gegebenenfalls niedermolekulare Stoffe, wie Alkohole oder Ether zugesetzt werden. Beispiele hierfür sind Ethanol, Isopropanol, n-Butanol, 2-Butoxyethanol, Diethylenglycolmonobutylether, Tetraethylenglycolmonohexylether, Hexaethylenglycolmonooctylether, Tetrahydrofuran, Diethylenglycoldiethylether und Dimethoxyethan, wobei Tetraethylenglycolmonohexylether ein bevorzugtes Beispiel ist. Bevorzugte Zusatzmengen sind im Fall sehr viskoser Produkte bis zu 50 Gew.-%, besonders bevorzugt bis zu 30 Gew.-%, bezogen auf die erfindungsgemäßen hydrophilen Polysiloxancopolymere. Derartige Zusätze haben außerdem den Vorteil, dass die daraus entstehenden Produkte in Wasser leichter dispergierbar sind als die reinen Polysiloxancopolymere.

Die erfindungsgemäßen Entschäumerformulierungen können zusätzlich Polyether-Polysiloxan-Copolymere (F) enthalten, wie sie biespielsweise in DE-A 102 55 649, EP-A 663 225 und EP-A 1076073 beschrieben sind. Die Polyether-Polysiloxan-Copolymere (F) können mit den erfindungsgemäßen Polysiloxancopolymeren (B) abgemischt werden. Die Polyether-Polysiloxan-Copolymere (F) können in den erfindungsgemäßen Entschäumerformulierungen vorzugsweise in Mengen von 0 bis 30 Gew.-%, bezogen auf das Gesamtgewicht der Entschäumerformulierung, eingesetzt werden.

Die erfindungsgemäßen Entschäumerformulierungen enthalten bevorzugt
(A) 1 bis 90 Gew-% Antischaummittel auf Basis von Siloxanen,
(B) 0,1 bis 50 Gew.-% des erfindungsgemäßen Polysiloxancopolymeren,
(C) 0 bis 20 Gew.-%, vorzugsweise 2 bis 20 Gew.-% Emulgatoren,
(D) 0 bis 97 Gew.-% Wasser,
   jeweils bezogen auf das Gesamtgewicht der Entschäumerformulierungen, und gegebenenfalls
(E) Konservierungsmittel, Verdicker und weitere Zusätze.

Als Antischaummmittel auf Basis von Siloxanen (im weiteren auch mit Siloxanentschäumer bezeichnet) wird üblicherweise eine Mischung aus Kieselsäure und Polyorganosiloxanen verwendet,
wobei die Mischung bevorzugt
(aa) 1 bis 15 Gew.-% einer in situ hydrophobierten, gefällten und/oder pyrogenen Kieselsäure mit einer BET-Oberfläche größer 50 g/m² und/oder einer vorbehandelten, hydrophoben, gefällten und/oder pyrogenen Kieselsäure mit einer BET-Oberfläche größer 50 g/m²,
(ab) 20 bis 99 Gew.-% eines oder mehrerer Polyorganosiloxane aus Einheiten der allgemeinen Formel

   R⁸ₑ(R⁹O)_{d}SiO_{(4-e-d)/2} (XIV),

   worin R⁸ gleich oder verschieden sein kann und einen einwertigen, substituierten und/oder unsubstituierten gesättigten und/oder ungesättigten Kohlenwasserstoffrest mit 1 bis 30 Kohlenstoffatomen je Rest bedeutet,
   R⁹ gleich oder verschieden sein kann und ein Wasserstoffatom oder einen einwertigen, substituierten und/oder unsubstituierten gesättigten und/oder ungesättigten Kohlenwasserstoffrest mit 1 bis 30 Kohlenstoffatomen je Rest bedeutet,
   d 0, 1, 2 oder 3 ist, wobei d durchschnittlich ein Wert von kleiner als 0,5 ist,
   e 0, 1, 2 oder 3 ist,
   mit der Maßgabe, dass die Summe (d+e) < 3 ist und durchschnittlich einen Wert von 1,8 bis 2,4, aufweist,
(ac) 0 bis 10 Gew.-% eines Siliconharzes, welches im wesentlichen aus Einheiten der allgemeinen Formel R₃SiO_{1/2} und SiO_{4/2} besteht, wobei R die oben dafür angegebene Bedeutung hat, und
(ad) 0 bis 80 Gew.-% einer organischen Verbindung mit einem Siedepunkt größer als 100 °C, ausgewählt aus Mineralölen, nativen Ölen, Isoparaffinen, Polyisobutylenen, Rückständen aus der Oxoalkoholsynthese, Estern niedermolekularer synthetischer Carbonsäuren, Ethern niedermolekularer Alkohole, Phthalaten und Estern der Phosphorsäure,
   wobei die Gew.-% jeweils bezogen sind auf das Gesamtgewicht des Antischaummittels, enthält.

Die in situ Hydrophobierung der Kieselsäure (aa) kann durch mehrstündiges Erhitzen der im Polyorganosiloxan (ab) dispergierten Kieselsäure auf Temperaturen von 100 bis 200 °C erfolgen. Dabei kann die Reaktion durch den Zusatz von Katalysatoren, wie KOH, und von Hydrophobiermitteln, wie kurzkettigen OH-terminierten Polydimethylsiloxanen, Silanen, Silazanen oder Siliconharzen, unterstützt werden. Als Alternative können vorbehandelte, hydrophobierte Kieselsäuren zum Einsatz kommen, oder aber auch eine Kombination von in situ hydrophobierten Kieselsäuren mit vorbehandelten hydrophobierten Kieselsäuren.

Beispiele für Reste R⁸ in der allgemeinen Formel (II) sind unsubstituierte, verzweigte oder unverzweigte Alkylreste, wie Methyl-, Ethyl-, Propyl-, Isopropyl-, Hexyl-, 2-Ethylhexyl, Octyl-, oder Dodecylreste; substituierte Alkylreste, wie Trifluorpropyl-, Cyanoethyl-, Glycidoxypropyl-, Polyalkylenglycolpropyl-, Aminopropyl- oder Aminoethylaminopropylreste; ungesättigte Reste, wie Vinyl-, Methacryloxypropyl- oder Allylreste; aromatische Reste, wie Phenyl-, Tolyl-, Xylyl-, Naphthyl-, Anthracyl- oder Benzylreste. Besonders bevorzugte Reste R⁸ sind der Methyl- oder Phenylrest, wobei es besonders bevorzugt ist, wenn mehr als 80 Mol-% der Reste R⁸ Methylreste sind.

Beispiele für Reste R⁹ in der allgemeinen Formel (II) sind unsubstituierte, verzweigte oder unverzweigte Alkylreste, wie Methyl-, Ethyl-, Propyl-, Isopropyl-, Hexyl-, 2-Ethylhexyl, Octyl-, oder Dodecylreste; substituierte Alkylreste, wie Trifluorpropyl-, Cyanoethyl-, Glycidoxypropyl-, Polyalkylenglycolpropyl-, Aminopropyl- oder Aminoethylaminopropylreste; ungesättigte Reste, wie Vinyl-, Methacryloxypropyl- oder Allylreste; aromatische Reste, wie Phenyl-, Tolyl-, Xylyl-, Naphthyl-, Anthracyl- oder Benzylreste.

Beispiele für Verbindungen der Formel (XIV) sind Polydimethylsiloxane mit Viskositäten von 100 bis 1.000.000 mPa·s bei 25°C. Diese Polydimethylsiloxane können z. B. durch den Einbau von CH₃SiO_{3/2}- oder SiO_{4/2}-Einheiten verzweigt sein.

Diese verzweigten oder anvernetzten Siloxane weisen dann viskoelastische Eigenschaften auf.

Derartige verzweigte viskoelastische Polyorganosiloxane können beispielsweise erhalten werden durch Umsetzung des Dimethyldichlorsilan-Hydrolyseproduktes oder von hydroxyterminierten Polydimethylsiloxanen mit einem trimethylsilylterminierten Polydimethylsiloxan und einer Verbindung, ausgewählt aus einem Silan mit mindestens drei hydrolysierbaren Gruppen, wie Tetraethoxysilan, Methyltrimethoxysilan oder Methyltriacetoxysilan, oder einem Siliconharz, welches im wesentlichen aus (CH₃)₃SiO_{1/2}- und SiO₂-Einheiten im Verhältnis von 2 zu 1 bis 1 zu 2 aufgebaut ist, in Gegenwart eines Katalysators.

Eine weitere Variante zur Herstellung von verzweigten viskoelastischen Polyorganosiloxanen ist die Umsetzung von einem Organosiloxan X¹ mit statistisch verteilten, durchschnittlich weniger als 2 funktionellen Gruppen pro Molekül mit einem Organosiloxan X² mit statistisch verteilten, durchschnittlich mehr als 2 funktionellen Gruppen pro Molekül, wobei pro Siloxan X¹ oder X² jeweils nur eine Art an funktionellen Gruppen vorliegt, in Gegenwart eines Hydrosilylierungen fördernden Katalysators, wie beispielsweise Platin oder Platinverbindungen.

Weiterhin kann das Antischaummittel auf Basis von Siloxanen 0,1 bis 10 Gew.-%, bevorzugt 0,5 bis 5 Gew.-%, mindestens eines Polyorganosiloxans (ab') der allgemeinen Formel (XIV) enthalten, worin R⁸ einen Methylrest und R⁹ einen linearen und/oder verzweigten Kohlenwasserstoffrest mit mindestens 6 Kohlenstoffatomen bedeuten, d einen Wert von 0,005 bis 0,5 annimmt und die Summe (d+e) einen Wert von 1,9 bis 2,1 annimmt. Derartige Produkte sind beispielsweise durch alkalisch katalysierte Kondensation von silanolterminierten Polydimethylsiloxanen einer Viskosität 50 bis 50.000 mPa·s bei 25°C und aliphatischen Alkoholen mit mehr als 6 Kohlenstoffatomen, wie Isotridecylalkohol, n-Octanol, Stearylalkohol, 4-Ethyl-hexadecanol oder Eicosanol, zugänglich.

In den erfindungsgemäßen Entschäumerformulierungen können weitere bekannte Zusätze oder Hilfsstoffe enthalten sein, beispielsweise weitere Füllstoffe, wie Aluminiumoxid, Metallseifen, hydrophobiertes Quarzmehl oder fein verteilte hydrophobe Polyurethane. Aber auch der Zusatz von als Entschäumeröle wirkenden Substanzen, wie Mineralöle, Paraffinöle, Fettsäureester, Fettalkohole und Wachse in Mengen von 1 bis 99 Gew.-%, bezogen auf das Gesamtgewicht der Formulierung, ist möglich. Weiterhin können als Verdicker bekannte Verbindungen, wie Polyacrylsäure, Polyacrylate, Celluloseether wie Carboxymethylcellulose und Hydroxyethylcellulose, natürliche Gume wie Xanthan Gum und Polyurethane, zugesetzt werden.

Das Herstellen der erfindungsgemäßen Entschäumerformulierung erfolgt nach bekannten Verfahren, beispielsweise unter Anwendung von hohen Scherkräften in Kolloidmühlen oder Rotor-Stator-Homogenisatoren. Dabei kann der Mischvorgang bei reduziertem Druck erfolgen, um das Einmischen von Luft, welche in hochdispersen Füllstoffen enthalten ist, zu verhindern.

Bevorzugt ist die Anwendung der erfindungsgemäßen Entschäumerformulierungen in Öl-in-Wasser-Emulsionen (O/W-Emulsionen). Die in den erfindungsgemäßen Entschäumerformulierungen eingesetzten speziellen Polysiloxancopolymere weisen Tensideigenschaften auf, sie sind deshalb auch als Emulgatoren für die Bildung von Öl-in-Wasser-Emulsionen, ausgehend von Antischaummitteln auf der Basis von Siloxanen, geeignet. Den Entschäumerformulierungen, wenn sie als Emulsionen eingesetzt werden, können noch zusätzliche organische Emulgatoren, welche O/W-Emulsionen auf der Basis von Siloxanen bilden können, zugesetzt werden.
Die Polysiloxancopolymere (B) können gemeinsam mit dem Antischaummittel (A) emulgiert werden, oder die Polysiloxancopolymere (B) können aber auch einfach nach der Herstellung einer Emulsion von dem Antischaummittel (A) der Antischaummittelemulsion direkt oder in Form einer Emulsion zugesetzt werden, um eine Wirkungsverbesserung zu erzielen.

Die erfindungsgemäßen Entschäumerformulierungen in Form von O/W-Emulsionen enthalten vorzugsweise
(A) 5 bis 50 Gew.-% Antischaummittel auf Basis von Siloxanen,
(B) 0,1 bis 30 Gew.-% des erfindungsgemäßen Polysiloxancopolymeren,
(C) 2 bis 20 Gew.-% eines Emulgators sowie
(D) 50 bis 95 Gew.-% Wasser,
   jeweils bezogen auf das Gesamtgewicht der Entschäumerformulierungen, und gegebenenfalls
(E) Konservierungsmittel, Verdicker und weitere Zusätze.

Die zur Herstellung der Emulsionen benötigten Emulgatoren können anionisch, kationisch oder nichtionogen sein und sind dem Fachmann zur Herstellung von stabilen Siliconemulsionen bekannt. Bevorzugt werden Emulgatormischungen eingesetzt, wobei mindestens ein nichtionogener Emulgator, wie beispielsweise Sorbitanfettsäureestern, ethoxylierten Sorbitanfettsäureestern, ethoxylierten Fettsäuren, ethoxylierten linearen oder verzweigten Alkoholen mit 10 bis 20 Kohlenstoffatomen und/oder Glycerinestern, enthalten sein sollte.

Technologien zur Herstellung von Siliconemulsionen sind bekannt. Üblicherweise erfolgt die Herstellung durch einfaches Verrühren aller Bestandteile und anschließendes Homogenisieren mit Rotor-Stator-Homogenisatoren, Kolloidmühlen oder Hochdruckhomogenisatoren.

Die erfindungsgemäßen Entschäumerformulierungen sind überall dort einsetzbar, wo bei Prozessen eine störende Schaumbildung auftritt, die vermindert oder ganz beseitigt werden soll. Das ist z.B. die Anwendung in Wasch- und Reinigungsmitteln, die Bekämpfung von Schaum in Abwasseranlagen, bei Textilfärbeverfahren, bei der Erdgaswäsche, in Dispersionen und in Kohlenwasserstoffen.

Insbesondere sind die erfindungsgemäßen Entschäumerformulierungen hervorragend zum Entschäumen von bei der Zellstoffherstellung anfallenden wässrigen Medien einsetzbar.

### Ausführungsbeispiele

Alle im Folgenden angegebenen Teile und Prozentsätze sind (wenn nicht anders angegeben) auf das Gewicht bezogen. Die Viskositäten beziehen sich auf 25°C.

### (A) Herstellung der Siloxanentschäumer

**A1:** 94 Teile Polydimethylsiloxan einer Viskosität von 12.500 mm²/s und 6 Teile einer hydrophilen Kieselsäure wurden mit einer Kolloidmühle (Spalt 0,6 mm) dreimal homogenisiert. Durch 10 stündiges Erhitzen der Mischung auf 190 °C wurde die Kieselsäure in situ hydrophobiert.

**A2:** 400 Teile eines hydroxyterminierten Polydimethylsiloxans einer Viskosität von 65 mm²/s, 40 Teile trimethylsiloxyterminiertes Polydimethylsiloxan einer Viskosität von 40 mm²/s, 4 Teile Methyltrimethoxysilan und 1 Teil eines 0,5%igen Phosphornitridchloridkatalysators wurden auf 100 °C erhitzt. Im Verlauf von 20 Minuten wurde der Druck auf 35 mbar abgesenkt. Danach erfolgte die Neutralisation des Katalysators mit 0,03 Teilen Triisooctylamin. Das erhaltene Polyorganosiloxan wies eine Viskosität von 19.000 mm²/s auf. In 95 Teile dieses Öles wurden 5 Teile einer vorbehandelten hydrophoben Kieselsäure eingearbeitet und mit einer Kolloidmühle homogensiert.

**A3:** Eine Mischung aus 89,3 Teilen eines trimethylsiloxyterminierten Polydimethylsiloxans einer Viskosität von 5.000 mm²/s, 5 Teilen einer pyrogenen hydrophilen Kieselsäure mit einer BET-Oberfläche von 300 m²/g, 0,7 Teilen einer 20%igen methanolischen KOH, 2,5 Teilen eines Siliconharzes aus 40 mol% Trimethylsiloxyeinheiten und 60 mol% SiO_{4/2}-Einheiten und 2,5 Teilen eines Siloxans, das durch Kondensation von Eicosanol mit einem hydroxyterminierten Polydimethylsiloxan einer Viskosität von 65 mm²/s hergestellt wurde, wurden 2 h auf 150 °C erhitzt. Nach Abkühlen wurde die Mischung mit einer Kolloidmühle homogenisiert.

### (B) Herstellung der Polysiloxancopolymere

### Herstellung des erfindungsgemäßen Polysiloxancopolymers

### (Polymer 1):

67g eines mit Methylgruppen terminierten Siloxans aus Dimethylsiloxy- und Hydrogenmethylsiloxyeinheiten mit einem Aktivwasserstoffgehalt von 0,133% und einer Viskosität von 72 mm²/s (25°C) werden unter kräftigem Rühren mit 408g eines Allylpolyethers (560 ppm H₂O-Gehalt) mit einem PO/EO-Verhältnis von 4,0 und einer Jodzahl von 11,2 vermischt und auf 100°C erwärmt. Durch Zugabe von 0,5 ml einer 2%-igen Lösung von Hexachloroplatinsäure in Isopropanol wird die Hydrosilylierung gestartet, was sich in einer schwach exothermen Reaktion zeigt. Das Reaktionsgemisch wird bei 100 - 110°C gehalten, bis ein klares Copolymer erhalten wird und kein Aktivwasserstoff mehr nachweisbar ist. Das Zwischenprodukt hat eine Viskosität von 870 mm²/s (25°C).

Man erwärmt weiter auf 130°C und entfernt Wasserspuren im Vakuum. Danach werden 7g Hexamethylendiisocyanat eindosiert und 20 Minuten lang homogenisiert. Die Isocyanatreaktion wird mit einem Tropfen DBTL gestartet. Nach 2 Stunden ist der NCO-Gehalt unter die Nachweisgrenze (IR: 20 ppm) gesunken, so dass 120g Emulan® HE 50 (BASF) eindosiert werden. Die 80%-ige Copolymerlösung hat nach dem Abkühlen auf 25°C eine Viskosität von 2100 mm²/s und einen Urethangehalt von 0,139m*E*qu./g.
Vergleichsversuch **(Polymer 2):**

Es wurde als Polymer 2 ein handelsübliches unverzweigtes Polyether-Polysiloxan-Copolmeres mit einer Viskosität von 800 mPa·s bei 25°C und einem Trübungspunkt von 30°C verwendet.
Vergleichsversuch **(Polymer 3)** gemäß EP-A 1 076 073:

Es wurde als Polymer 3 ein Polymer entsprechend Beispiel B3 aus EP-A 1 076 073 verwendet.
Vergleichsversuch **(Polymer 4)** gemäß DE-A 10255649:

Es wurde als Polymer 4 ein Polymer entsprechend Polymer 1 aus DE-A 10255649 verwendet.

### (C) Herstellung und Prüfung der Entschäumerformulierungen

### Prüfung der Wirksamkeit (Schwarzlaugentest):

400 ml Schwarzlauge (Hardwood aus der Verarbeitung von Birken) wurden in einem 1 l Messzylinder mit Waschflaschenaufsatz 15 Minuten mit einem Thermostat auf 80°C temperiert. Nach Zugabe von 10 mg siliziumorganischen Polymeren (die Summe von Siliconentschäumer A und Polysiloxancopolymer B) in Form der hergestellten Entschäumformulierung wurde die Schwarzlauge mit einer Geschwindigkeit von 2,3 1/min umgepumpt, immer dann (insgesamt 3 mal), wenn im Messzylinder eine Schaumhöhe von 30 cm erreicht war, wurden sofort 5 mg Silicon zugegeben (insgesamt 25 mg Silicon). Es wurde die Zeit t zwischen dem Beginn des Testes und dem Zeitpunkt nach der letzten Zugabe, wenn der Schaum erneut auf 30 cm gestiegen war, gemessen.
Je länger dieser Zeitraum t ist, desto wirksamer ist der Entschäumer.

### Beispiele 1 bis 3 (C11, C12, C13) sowie

### Vergleichsversuche 1 und 2 (CV11,CV12 und CV13):

Die Herstellung der erfindungsgemäßen Entschäumerformulierungen C11, C12, C13 und der Entschäumerformulierungen CV11,CV12 und CV13 gemäß Vergleichsversuchen erfolgte durch einfaches Mischen von 90 Teilen des in der Tabelle angegebenenen Siliconentschäumers und 10 Teilen des in der Tabelle angegebenen Polysiloxancopolymers mit einem Labordissolver. Zur Prüfung wurde eine Mischung aus 20 Teilen dieser Entschäumerformulierung und 80 Teilen eines Gemisches aus aliphatischen Kohlenwasserstoffen einer Viskosität von 3 mm²/s und einem Flammpunkt > 100 °C mit einem Labordissolver bei 1.000 min⁻¹ hergestellt.
Die Ergebnisse der Prüfung der Wirksamkeit sind in der Tabelle zusammengefasst.

### Beispiele 4 bis 6 (C21, C22 und C23) und

### Vergleichsversuche 3 bis 5 (CV21, CV22, CV23 und CV24):

Zur Herstellung der erfindungsgemäßen Entschäumerformulierungen C21, C22 und C23 und der Entschäumerformulierungen CV21, CV22, CV23 und CV24 gemäß Vergleichsversuchen wurden 20 Teile des in der Tabelle angegebenen Siliconentschäumers, 5 Teile Sorbitanmonostearat, 5 Teile Polyoxyethylen(40)stearat, und 5 Teile des in der Tabelle angegebenen Polysiloxancopolymers bei 70°C vermischt. 10 Teile einer 1%igen Lösung von Xanthan-Gum, konserviert mit 0,5 % Formaldehyd, wurden mit einem Flächenrührer bei 600 min⁻¹ eingerührt. Innerhalb von 3 Minuten wurden portionsweise 55 Teile Wasser zugegeben und 15 min bei 1.000 min⁻¹ nachgerührt.
Die Ergebnisse der Prüfung der Wirksamkeit sind in der Tabelle zusammengefasst.

### Beispiele 7 bis 9 (C31, C32 und C33) und

### Vergleichsversuche 6 und 7 (CV31, CV32 und CV33 ):

Zur Herstellung der erfindungsgemäßen Entschäumerformulierungen C31, C32 und C33 sowie der Entschäumerformulierungen CV31, CV32 *und CV33* gemäß Vergleichsversuchen wurden 20 Teile des in der Tabelle angegebenen Siloxanentschäumers, 4 Teile Polyoxyethylen(4)stearat und 2 Teile Polyoxyethylen(40)stearat, bei 70°C vermischt. Innerhalb von 10 Minuten wurden portionsweise 69 Teile Wasser zugegeben. In die erhaltenen Emulsion wurden abschließend 5 Teile des in der Tabelle angegebenen Polysiloxancopolymers gegeben und 15 Minuten bei 1.000 min⁻¹ nachgerührt.
Die Ergebnisse der Prüfung der Wirksamkeit sind in der Tabelle zusammengefasst.

**Tabelle: Rezeptur und Prüfergebnisse der Entschäumerformulierungen**

| **Beispiel bzw. Vergleichsversuch** | **Siliconentschäumer** | **Polysiloxancopolymer** | **Schwarzlaugen -test, t in s** |
|---|---|---|---|
| C11 | A1 | Polymer 1 | 2040 |
| C12 | A2 | Polymer 1 | 2560 |
| C13 | A3 | Polymer 1 | 3190 |
| CV11 nicht erfindungsgemäß | A3 | Polymer 2 | 905 |
| CV12 nicht erfindungsgemäß | A3 | Polymer 3 | 1610 |
| CV13 nicht erfindungsgemäß | *A3* | *Polymer 4* | 1650 |
| C21 | A1 | Polymer 1 | 4160 |
| C22 | A2 | Polymer 1 | 5470 |
| C23 | A3 | Polymer 1 | 7920 |
| CV21 nicht erfindungsgemäß | A1 | ohne | 605 |
| CV22 nicht erfindungsgemäß | A1 | Polymer 2 | 1780 |
| CV23 nicht erfindungsgemäß | A1 | Polymer 3 | 2710 |
| CV24 nicht erfindungsgemäß | A1 | Polymer 4 | 2850 |
| C31 | A1 | Polymer 1 | 4620 |
| C32 | A2 | Polymer 1 | 5715 |
| C33 | A3 | Polymer 1 | 6505 |
| CV31 nicht erfindungsgemäß | A3 | ohne | 550 |
| CV32 nicht erfindungsgemäß | A3 | Polymer 3 | 2565 |
| CV33 nicht erfindungsgemäß | A3 | Polymer 4 | 2700 |

Die deutlich verbesserte Wirksamkeit der erfindungsgemäßen Entschäumerformulierungen gegenüber dem Stand der Technik (Vergleichsversuche) ist aufgrund der wesentlich höheren Werte für t offensichtlich.

Die Wiederholung der Entschäumerprüfung in einer Softwood-Schwarzlauge (Kiefer) bestätigte die überragende Wirksamkeit der erfindungsgemäßen Entschäumerformulierungen.

## Patentansprüche

1. Entschäumerformulierungen enthaltend
(A) Antischaummittel auf der Basis von Siloxanen und
(B) Polysiloxancopolymere herstellbar indem in einem ersten Schritt
Organopolysiloxane (1), die pro Molekül mindestens ein Si-gebundenes Wasserstoffatom, vorzugsweise mindestens zwei Si-gebundene Wasserstoffatome, aufweisen, mit weitgehend linearen oligomeren oder polymeren
Verbindungen (2) der allgemeinen Formel
R¹-(A-CₙH₂ₙ)ₘ-A¹-H (I),
wobei R¹ einen einwertigen gegebenenfalls substituierten Kohlenwasserstoffrest bedeutet, an den Si-H-Gruppen in einer Hydrosilylierungsreaktion angelagert werden können,
A einen zweiwertigen, polaren organischen Rest ausgewählt aus der Gruppe von -O- , -C(O)-O- , -O-C(O)-, -O-C(O)-O- , -C(O)-NH- , -NH-C(O)- , Urethanrest und Harnstoffrest bedeutet,
A¹ einen zweiwertigen, polaren organischen Rest ausgewählt aus der Gruppe von -O- , -NH- und -NR'-(wobei R^{'} einen einwertigen Kohlenwasserstoffrest mit 1 bis 18 Kohlenstoffatomen bedeutet) bedeutet,
n eine ganze Zahl von 1 bis 20 ist und
m eine ganze positive Zahl ist,
umgesetzt werden,
und in einem zweiten Schritt
die so erhaltenen H-A¹-Gruppen aufweisenden Zwischenprodukte (4) mit organischen Verbindungen (5), die pro Molekül mindestens zwei Isocyanatgruppen aufweisen, umgesetzt werden,
mit der Maßgabe, dass der Wassergehalt der zur Herstellung der Polysiloxancopolymere eingesetzten Verbindungen (1) und (2) niedriger ist als 2000 Gew.-ppm, bezogen auf das Gesamtgewicht von Verbindungen (1) und (2).

2. Entschäumerformulierungen nach Anspruch 1, **dadurch gekennzeichnet, dass** die Entschäumerformulierungen 0,1 bis 50 Gew.-% Polysiloxancopolymere (B) enthalten.

3. Entschäumerformulierungen nach Anspruch 1 oder 2, **dadurch gekennzeichnet, dass** die organischen Verbindungen (5), die pro Molekül mindestens zwei Isocyanatgruppen aufweisen, in Mengen von 0,1 bis 0,9 Mol Isocyanatgruppe je Mol H-A¹-Gruppe im Zwischenprodukt (4) eingesetzt werden.

4. Entschäumerformulierungen nach Anspruch 1, 2 oder 3, **dadurch gekennzeichnet, dass** als Organopolysiloxane (1) solche der allgemeinen Formel
H_{g}R_{3-g}SiO(SiR₂O)ₒ(SiRHO)ₚSiR_{3-g}H_{g} (III)
wobei R gleich oder verschieden sein kann und einen einwertigen, gegebenenfalls substituierten Kohlenwasserstoffrest mit 1 bis 18 Kohlenstoffatomen je Rest bedeutet,
g 0, 1 oder 2,
o 0 oder eine ganze Zahl von 1 bis 1500 und
p 0 oder eine ganze Zahl von 1 bis 200 ist,
mit der Maßgabe, dass pro Molekül mindestens ein Si-gebundenes Wasserstoffatom vorliegt,
eingesetzt werden.

5. Entschäumerformulierungen nach einem der Ansprüche 1 bis 4, **dadurch gekennzeichnet, dass** die Organopolysiloxane (1) α,ω-Dihydrogendiorganopolysiloxane sind.

6. Entschäumerformulierungen nach einem der Ansprüche 1 bis 5, **dadurch gekennzeichnet, dass** A und A¹ in Formel (I) ein Sauerstoffatom -O- sind.

7. Entschäumerformulierungen nach einem der Ansprüche 1 bis 6, **dadurch gekennzeichnet, dass** die Verbindung (2) ein aliphatisch ungesättigter Alkohol der allgemeinen Formel
H₂C=CH-R²-(OCₙH₂ₙ)ₘ-OH (IV),
wobei R² ein zweiwertiger Kohlenwasserstoffrest mit 1 bis 10 Kohlenstoffatomen ist und
n und m die in Anspruch 1 angegebene Bedeutung haben, ist.

8. Entschäumerformulierungen nach einem der Ansprüche 1 bis 7, **dadurch gekennzeichnet, dass** die Verbindung (5) ein Diisocyanat der allgemeinen Formel
O=C=N-R³-N=C=O (V),
wobei R³ einen zweiwertigen Kohlenwasserstoffrest mit 4 bis 40 Kohlenstoffatomen je Rest bedeutet,
ist.

9. Entschäumerformulierungen nach einem der Ansprüche 1 bis 8, **dadurch gekennzeichnet, dass** im zweiten Verfahrensschritt als weitere Verbindung (7) solche ausgewählt aus der Gruppe der Formeln
R⁴-(A-CₙH₂ₙ)ₘ-A¹-H (VII),
HO-R⁵-NR⁴-R⁵-OH (VIII),
HO-R⁵-NR⁴₂ (IX),
HO-R⁶(NR⁴₂)₂ (X),
HO-R⁷(NR⁴₂)₃ x (X),
(HO)₂R⁶-NR⁴₂ (XII) und
HNR⁴₂ (XIII)
wobei R⁴ ein Wasserstoffatom oder einen Rest R, der gegebenenfalls ein Stickstoffatom enthalten kann, bedeutet, R⁵ einen zweiwertigen Kohlenwasserstoffrest mit 1 bis 10 Kohlenstoffatomen je Rest bedeutet,
R⁶ einen dreiwertigen organischen Rest mit 1 bis 100 Kohlenstoffatomen je Rest, vorzugsweise einen dreiwertigen Kohlenwasserstoffrest mit 1 bis 100 Kohlenstoffatomen, der ein oder mehrere Sauerstoffatome enthält,
R⁷ einen vierwertigen organischen Rest mit 1 bis 100 Kohlenstoffatomen je Rest, vorzugsweise einen vierwertigen Kohlenwasserstoffrest mit 1 bis 100 Kohlenstoffatomen, der ein oder mehrere Sauerstoffatome enthält, und
A¹, n und m die im Anspruch 1 dafür angegebene Bedeutung haben,
mitverwendet werden.

10. Entschäumerformulierungen nach Anspruch 9, **dadurch gekennzeichnet, dass** die organischen Verbindungen (5) in Mengen von 0,1 bis 0,9 Mol Isocyanatgruppe je Mol der Summe mit Isocyanatgruppen reagierender Gruppen aus der Summe von Zwischenprodukt (4) und Verbindungen (7) eingesetzt werden.

11. Entschäumerformulierungen nach einem der Ansprüche 1 bis 10 **dadurch gekennzeichnet, dass** die Polysiloxancopolymere (B) in Form von wässrigen Emulsionen oder Microemulsionen eingesetzt werden.

12. Entschäumerformulierungen nach einem der Ansprüche 1 bis 11, **dadurch gekennzeichnet, dass** sie (F) Polyether-Polysiloxan-Copolymere enthalten.

13. Entschäumerformulierungen nach einem der Ansprüche 1 bis 12 **dadurch gekennzeichnet, dass** sie enthalten
(A) 1 bis 90 Gew-% Antischaummittel auf Basis von Siloxanen,
(B) 0,1 bis 50 Gew.-% des Polysiloxancopolymeren nach einem der Ansprüche 1 bis 11,,
(C) 0 bis 20 Gew.-%, vorzugsweise 2 bis 20 Gew.-% Emulgatoren,
(D) 0 bis 97 Gew.-% Wasser,
jeweils bezogen auf das Gesamtgewicht der Entschäumerformulierungen,
und gegebenenfalls
(E) Konservierungsmittel, Verdicker und weitere Zusätze.

14. Entschäumerformulierungen nach einem der Ansprüche 1 bis 13, **dadurch gekennzeichnet, dass** sie Emulsionen sind und enthalten
(A) 5 bis 50 Gew.-% Antischaummittel auf Basis von Siloxanen,
(B) 0,1 bis 30 Gew.-% des Polysiloxancopolymeren nach einem der Ansprüche 1 bis 11,
(C) 2 bis 20 Gew.-% eines Emulgators,
(D) 50 bis 95 Gew.-% Wasser
jeweils bezogen auf das Gesamtgewicht der Entschäumerformulierungen,
und gegebenenfalls
(E) Konservierungsmittel, Verdicker und weitere Zusätze.

15. Entschäumerformulierungen nach einem der Ansprüche 1 bis 14, **dadurch gekennzeichnet, dass** als (A) Antischaummittel auf der Basis von Siloxanen eine Mischung aus Kieselsäure und Polyorganosiloxanen verwendet wird.

16. Entschäumerformulierungen nach einem der Ansprüche 1 bis 15, **dadurch gekennzeichnet, dass** die Polysiloxancopolymere (B) gemeinsam mit dem Antischaummittel (A) emulgiert werden, oder die Polysiloxancopolymere (B) nach der Herstellung einer Emulsion von dem Antischaummittel (A) der Antischaummittelemulsion direkt oder in Form einer Emulsion zugesetzt werden.

17. Verwendung von Entschäumerformulierungen nach einem der Ansprüche 1 bis 16 zum Entschäumen von bei der Zellstoffherstellung anfallenden wässrigen Medien.

## Claims

1. Defoamer formulations comprising
(A) siloxane-based antifoams and
(B) polysiloxane copolymers preparable by reacting
in a first step
organopolysiloxanes (1) which have per molecule at least one Si-bonded hydrogen atom, preferably at least two Si-bonded hydrogen atoms, with largely linear oligomeric or polymeric compounds (2) of the general formula
R¹ - (A-CₙH₂ₙ)ₘ-A¹-H (I),
where R¹ is a monovalent, optionally substituted hydrocarbon radical to which Si-H groups can be added in a hydrosilylation reaction,
A is a divalent, polar organic radical selected from the group of -O-, -C(O)-O-, -O-C(O)-, -O-C(O)-O-, -C(O)-NH-, -NH-C(O)-, urethane radical and urea radical,
A¹ is a divalent, polar organic radical selected from the group of -OH-, -NH- and -NR'- (where R' is a monovalent hydrocarbon radical having 1 to 18 carbon atoms),
n is an integer from 1 to 20, and
m is a positive integer,
and reacting
in a second step
the resultant intermediates (4), containing H-A¹ groups, with organic compounds (5) which have per molecule at least two isocyanate groups,
with the proviso that the water content of the compounds (1) and (2) used for preparing the polysiloxane copolymers is lower than 2000 ppm by weight, based on the total weight of compounds (1) and (2).

2. Defoamer formulations according to Claim 1, **characterized in that** the defoamer formulations contain 0.1% to 50% by weight of polysiloxane copolymers (B).

3. Defoamer formulations according to Claim 1 or 2, **characterized in that** the organic compounds (5) which have per molecule at least two isocyanate groups are used in amounts of 0.1 to 0.9 mol of isocyanate group per mole of H-A¹- group in the intermediate (4).

4. Defoamer formulations according to Claim 1, 2 or 3, **characterized in that** organopolysiloxanes (1) used are those of the general formula
H_{g}R_{3-g}SiO(SiR₂O)ₒ(SiRHO)ₚSiR_{3-g}H_{g} (III)
where R can be identical or different and is a monovalent, optionally substituted hydrocarbon radical having 1 to 18 carbon atoms per radical,
g is 0, 1 or 2,
o is 0 or an integer from 1 to 1500, and
p is 0 or an integer from 1 to 200,
with the proviso that there is at least one Si-bonded hydrogen atom per molecule.

5. Defoamer formulations according to any one of Claims 1 to 4, **characterized in that** the organopolysiloxanes (1) are α-ω-dihydrogendiorganopolysiloxanes.

6. Defoamer formulations according to any one of Claims 1 to 5, **characterized in that** A and A¹ in formula (I) are an oxygen atom -O-.

7. Defoamer formulations according to any one of Claims 1 to 6, **characterized in that** the compound (2) is an aliphatically unsaturated alcohol of the general formula
H₂C=CH-R²-(OCₙH₂ₙ)ₘ-OH (IV),
where R² is a divalent hydrocarbon radical having 1 to 10 carbon atoms and
n and m have the definition specified in claim 1.

8. Defoamer formulations according to any one of Claims 1 to 7, **characterized in that** the compound (5) is a diisocyanate of the general formula
O=C=N-R³-N=C=O (V),
where R³ is a divalent hydrocarbon radical having from 4 to 40 carbon atoms per radical.

9. Defoamer formulations according to any one of Claims 1 to 8, **characterized in that** in the second process step accompanying use is made as further compound (7) of compounds selected from the group of the formulae
R⁴-(A-CₙH₂ₙ)ₘ-A¹-H (VII),
HO-R⁵-NR⁴-R⁵-OH (VIII),
HO-R⁵-NR⁴₂ (IX),
HO-R⁶(NR⁴₂)₂ (X),
HO-R⁷(NR⁴₂)₃ (XI),
(HO)₂R⁶-NR⁴₂ (XII), and
HNR⁴₂ (XIII)
where R⁴ is a hydrogen atom or a radical R, which may optionally contain a nitrogen atom,
R⁵ is a divalent hydrocarbon radical having 1 to 10 carbon atoms per radical,
R⁶ is a trivalent organic radical having 1 to 100 carbon atoms per radical, preferably a trivalent hydrocarbon radical having 1 to 100 carbon atoms and containing one or more oxygen atoms,
R⁷ is a tetravalent organic radical having 1 to 100 carbon atoms per radical, preferably a tetravalent hydrocarbon radical having 1 to 100 carbon atoms and containing one or more oxygen atoms, and
A¹, n, and m have the definition specified for them in claim 1.

10. Defoamer formulations according to Claim 9, **characterized in that** the organic compounds (5) are used in amounts of 0.1 to 0.9 mol of isocyanate group per mole of the sum of groups that react with isocyanate groups, from the sum of intermediate (4) and compounds (7).

11. Defoamer formulations according to any one of Claims 1 to 10, **characterized in that** the polysiloxane copolymers (B) are used in the form of aqueous emulsions or microemulsions.

12. Defoamer formulations according to any one of Claims 1 to 11, **characterized in that** it comprises (F) polyether-polysiloxane copolymers.

13. Defoamer formulations according to any one of Claims 1 to 12, **characterized in that** they comprise
(A) 1% to 90% by weight of siloxane-based antifoams,
(B) 0.1% to 50% by weight of the polysiloxane copolymer of any one of claims 1 to 11,
(C) 0% to 20% by weight, preferably 2% to 20% by weight of emulsifiers,
(D) 0% to 97% by weight of water,
based in each case on the total weight of the defoamer formulations,
and optionally
(E) preservatives, thickeners, and further additions.

14. Defoamer formulations according to any one of Claims 1 to 13, **characterized in that** they are emulsions and comprise
(A) 5% to 50% by weight of siloxane-based antifoams,
(B) 0.1% to 30% by weight of the polysiloxane copolymer of any one of claims 1 to 11,
(C) 2% to 20% by weight of an emulsifier,
(D) 50% to 95% by weight of water,
based in each case on the total weight of the defoamer formulations,
and optionally
(E) preservatives, thickeners, and further additions.

15. Defoamer formulations according to any one of Claims 1 to 14, **characterized in that** a mixture of silica and polyorganosiloxanes is used as siloxane-based antifoams (A).

16. Defoamer formulations according to any one of Claims 1 to 15, **characterized in that** the polysiloxane copolymers (B) are emulsified together with the antifoam (A), or the polysiloxane copolymers (B) are added after the preparation of an emulsion from the antifoam (A) to the antifoam emulsion directly or in the form of an emulsion.

17. Use of a defoamer formulations according to any one of Claims 1 to 16 for defoaming aqueous media obtained in pulp production.

## Revendications

1. Compositions d'antimousses contenant
(A) des antimousses à base de siloxanes et
(B) des copolymères polysiloxane pouvant être préparés
dans une première étape
en faisant réagir des organopolysiloxanes (1) qui comportent par molécule au moins un atome d'hydrogène lié à Si, de préférence au moins deux atomes d'hydrogène liés à Si, avec des composés (2) oligomères ou polymères essentiellement linéaires, de formule générale
R¹-(A-CₙH₂ₙ)ₘ-A¹-H (I),
dans laquelle R¹ représente un radical hydrocarboné monovalent, éventuellement substitué, auquel peuvent être fixés des groupes Si-H dans une réaction d'hydrosilylation,
A représente un radical organique polaire divalent, choisi dans l'ensemble constitué par -O-, -C(O)-O-, -O-C(O)-, -O-C(O)-O-, -C(O)-NH-, -NH-C(O)-, un reste d'uréthanne et un reste d'urée,
A¹ représente un radical organique polaire divalent, choisi dans l'ensemble constitué par -O-, -NH- et -NR'- (R' représentant un radical hydrocarboné ayant de 1 à 18 atomes de carbone),
n est un nombre entier allant de 1 à 20 et
m est un nombre entier positif,
et dans une deuxième étape
en faisant réagir les produits intermédiaires (4) ainsi obtenus, comportant des groupes H-A¹, avec des composés organiques (5) qui comportent au moins deux groupes isocyanate par molécule,
étant entendu que la teneur en eau des composés (1) et (2) utilisés pour la préparation des copolymères polysiloxane est inférieure à 2 000 ppm en poids, par rapport au poids total des composés (1) et (2).

2. Compositions d'antimousses selon la revendication 1, **caractérisées en ce que** les compositions d'antimousses contiennent de 0,1 à 50 % en poids de copolymères polysiloxane (B).

3. Compositions d'antimousses selon la revendication 1 ou 2, **caractérisées en ce que** les composés organiques (5) qui comportent au moins deux groupes isocyanate par molécule sont utilisés en des quantités de 0,1 à 0,9 mole de groupe isocyanate par mole de groupe H-A¹ dans le produit intermédiaire (4).

4. Compositions d'antimousses selon la revendication 1, 2 ou 3, **caractérisées en ce qu'**on utilise comme organopolysiloxanes (1) ceux de formule générale
H_{g}R_{3-g}SiO(SiR₂O)ₒ(SiRHO)ₚSiR_{3-g}H_{g} (III)
où R peut être le même ou différent et représente un radical hydrocarboné monovalent, éventuellement substitué, ayant de 1 à 18 atomes de carbone par radical,
g est 0, 1 ou 2,
o est 0 ou un nombre entier allant de 1 à 1 500 et
p est 0 ou un nombre entier allant de 1 à 200,
étant entendu qu'au moins un atome de carbone lié à Si est présent par molécule.

5. Compositions d'antimousses selon l'une quelconque des revendications 1 à 4, **caractérisées en ce que** les organopolysiloxanes (1) sont des α,ω-dihydrogénodiorganopolysiloxanes.

6. Compositions d'antimousses selon l'une quelconque des revendications 1 à 5, **caractérisées en ce que** A et A¹ dans la formule (I) représentent un atome d'oxygène -O-.

7. Compositions d'antimousses selon l'une quelconque des revendications 1 à 6, **caractérisées en ce que** le composé (2) est un alcool aliphatique insaturé de formule générale
H₂C=CH-R²-(OCₙH₂ₙ)ₘ-OH (IV),
dans laquelle R² est un radical hydrocarboné divalent ayant de 1 à 10 atomes de carbone et
n et m ont les significations indiquées dans la revendication 1.

8. Compositions d'antimousses selon l'une quelconque des revendications 1 à 7, **caractérisées en ce que** le composé (5) est un diisocyanate de formule générale
O=C=N-R³-N=C=O (V)
dans laquelle R³ représente un radical hydrocarboné divalent ayant de 4 à 40 atomes de carbone par radical.

9. Compositions d'antimousses selon l'une quelconque des revendications 1 à 8, **caractérisées en ce que** dans une deuxième étape du procédé on utilise en même temps en tant qu'autre composé (7) un composé choisi parmi ceux de formules
R⁴-(A-CₙH₂ₙ)ₘ-A¹-H (VII),
HO-R⁵-NR⁴-R⁵-OH (VIII),
HO-R⁵-NR⁴₂ (IX),
HO-R⁶(NR⁴₂)₂ (X),
HO-R⁷(NR⁴₂)₃ (XI),
(HO)₂R⁶-NR⁴₂ (XII) et
HNR⁴₂ (XIII)
où R⁴ représente un atome d'hydrogène ou un radical R qui peut éventuellement contenir un atome d'azote,
R⁵ représente un radical hydrocarboné divalent ayant de 1 à 10 atomes de carbone par radical,
R⁶ représente un radical organique trivalent ayant de 1 à 100 atomes de carbone par radical, de préférence un radical hydrocarboné trivalent ayant de 1 à 100 atomes de carbone, qui contient un ou plusieurs atomes d'oxygène,
R⁷ représente un radical organique tétravalent ayant de 1 à 100 atomes de carbone par radical, de préférence un radical hydrocarboné tétravalent ayant de 1 à 100 atomes de carbone, qui contient un ou plusieurs atomes d'oxygène, et
A¹, n et m ont les significations indiquées pour ceux-ci dans la revendication 1.

10. Compositions d'antimousses selon la revendication 9, **caractérisées en ce que** les composés organiques (5) sont utilisés en quantités de 0,1 à 0,9 mole de groupe isocyanate par mole de la somme des groupes réagissant avec des groupes isocyanate, consistant en la somme du produit intermédiaire (4) et des composés (7).

11. Compositions d'antimousses selon l'une quelconque des revendications 1 à 10, **caractérisées en ce que** les copolymères polysiloxane (B) sont utilisés sous forme d'émulsions ou microémulsions aqueuses.

12. Compositions d'antimousses selon l'une quelconque des revendications 1 à 11, **caractérisées en ce qu'**elles contiennent (F) des copolymères polyéther-polysiloxane.

13. Compositions d'antimousses selon l'une quelconque des revendications 1 à 12, **caractérisées en ce qu'**elles contiennent
(A) 1 à 90 % en poids d'antimousse à base de siloxanes,
(B) 0,1 à 50 % en poids du copolymère polysiloxane selon l'une quelconque des revendications 1 à 11,
(C) 0 à 20 % en poids, de préférence 2 à 20 % en poids d'émulsifiants,
(D) 0 à 97 % en poids d'eau,
chaque fois par rapport au poids total des compositions d'antimousses,
et éventuellement
(E) des conservateurs, épaississants et autres additifs.

14. Compositions d'antimousses selon l'une quelconque des revendications 1 à 13, **caractérisées en ce qu'**elles sont des émulsions et contiennent
(A) 5 à 50 % en poids d'antimousse à base de siloxanes,
(B) 0,1 à 30 % en poids du copolymère polysiloxane selon l'une quelconque des revendications 1 à 11,
(C) 2 à 20 % en poids d'un émulsifiant,
(D) 50 à 95 % en poids d'eau,
chaque fois par rapport au poids total des compositions d'antimousses,
et éventuellement
(E) des conservateurs, épaississants et autres additifs.

15. Compositions d'antimousses selon l'une quelconque des revendications 1 à 14, **caractérisées en ce qu'**on utilise en tant que (A) antimousse à base de siloxanes un mélange d'acide silicique et de polyorganosiloxanes.

16. Compositions d'antimousses selon l'une quelconque des revendications 1 à 15, **caractérisées en ce que** les copolymères polysiloxanes (B) sont émulsionnés conjointement avec l'antimousse (A), ou les copolymères polysiloxane (B), après la préparation d'une émulsion de l'antimousse (A), sont ajoutés directement ou sous forme d'une émulsion à l'émulsion d'antimousse.

17. Utilisation de compositions d'antimousses selon l'une quelconque des revendications 1 à 16, pour le démoussage de milieux aqueux apparaissant lors de la production de la cellulose.
